(19) **Europäisches Patentamt / European Patent Office / Office européen des brevets**

(11) **EP 4 545 937 B1**

(12) **FASCICULE DE BREVET EUROPEEN**

(45) Date de publication et mention de la délivrance du brevet:
**19.11.2025 Bulletin 2025/47**

(21) Numéro de dépôt: **24201807.5**

(22) Date de dépôt: **21.09.2024**

(51) Classification Internationale des Brevets (IPC):
*G01N 15/1434* (2024.01)    *G01N 15/075* (2024.01)
*G01N 15/14* (2024.01)

(52) Classification Coopérative des Brevets (CPC):
**G01N 15/1436; G01N 15/075; G01N 15/1456;**
G01N 2015/0053; G01N 2015/1486

(54) **PROCÉDÉ ET SYSTÈME DE DÉTECTION DE PARTICULES PRÉSENTES DANS UN LIQUIDE**

VERFAHREN UND SYSTEM ZUM NACHWEIS VON PARTIKELN IN EINER FLÜSSIGKEIT

METHOD AND SYSTEM FOR DETECTING PARTICLES IN A LIQUID

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **23.10.2023 FR 2311476**

(43) Date de publication de la demande:
**30.04.2025 Bulletin 2025/18**

(73) Titulaire: **Commissariat à l'énergie atomique et aux énergies alternatives**
**75015 Paris (FR)**

(72) Inventeurs:
• **MERMET, Xavier**
**38054 Grenoble cedex 09 (FR)**
• **DEDOLE, Tommy**
**38054 Grenoble cedex 09 (FR)**
• **PAULUS, Caroline**
**38054 Grenoble cedex 09 (FR)**

(74) Mandataire: **INNOV-GROUP**
**209 Avenue Berthelot**
**69007 Lyon (FR)**

(56) Documents cités:
EP-B1- 3 294 372    EP-B1- 3 343 201
FR-A1- 3 090 107    FR-A1- 3 118 169

## Description

### Domaine technique de l'invention

La présente invention se rapporte à un procédé de détection de particules présentes dans un liquide.

### Etat de la technique

Dans certaines applications, il s'avère utile de détecter la présence de certaines particules dans un liquide, pour éventuellement les classifier et les compter. C'est le cas par exemple pour identifier des problèmes de pollution, ou pour contrôler la concentration en particules dans le liquide analysé. Les particules peuvent être des particules de microplastique, des bulles d'air, des particules métalliques...

Le brevet EP3343201B1 décrit un procédé de comptage de particules présentes dans un fluide en mouvement dans une chambre fluidique. Les particules sont entraînées par le mouvement du fluide. La détection est réalisée par imagerie sans lentille, en utilisant une source de lumière et un capteur d'image. Le capteur d'image est commandé pour acquérir plusieurs images successives de la chambre fluidique. Des moyens de traitement sont employés pour calculer la trajectoire des particules et en déduire le nombre de particules qui circulent à travers la chambre fluidique.

Le principe de cette solution repose sur un fluide en mouvement et n'est pas applicable à un fluide inerte. De plus, les durées de traitement peuvent être longues.

FR 3 118 169 A1 divulgue un procédé de caractérisation de particules en mouvement dans un échantillon à partir d'images capturées de l'échantillon.

Il existe un besoin de disposer d'une solution pour détecter des particules présentes dans un liquide pour éventuellement pouvoir les trier et/ou les compter, qui soit simple à mettre en œuvre et qui ne nécessite pas de durées de traitement longues.

### Exposé de l'invention

Ce but est atteint par un procédé de détection de particules d'un premier type, dites premières particules, présentes dans un liquide, ledit liquide contenant également des particules d'un deuxième type distinct du premier type, et dites deuxièmes particules, ledit liquide étant placé dans une chambre fluidique, lesdites premières particules ayant chacune une densité distincte de celle du liquide et de celle de chacune des deuxièmes particules, ladite chambre fluidique ayant un volume fermé occupé en totalité par ledit liquide, ladite détection étant mise en œuvre par capture d'images de ladite chambre fluidique, ledit procédé consistant à :

- Capturer à un premier instant au moins une première image de la chambre fluidique, ladite chambre fluidique étant dans une première position,
- Capturer à un deuxième instant, postérieur au premier instant, au moins une deuxième image de la chambre fluidique dans une deuxième position, ladite deuxième position étant une position inclinée par rapport à un plan horizontal et adaptée pour déclencher au moins un mouvement des premières particules à l'intérieur du liquide,
- Traiter lesdites images capturées pour déterminer le mouvement et/ou la vitesse des premières particules présentes dans le liquide,
- Discriminer les premières particules des deuxièmes particules à partir du mouvement et/ou de la vitesse desdites premières particules dans le liquide, ledit mouvement et/ou la vitesse desdites premières particules et desdites deuxièmes particules dans le liquide dépendant de leur densité respective par rapport à celle du liquide.

Selon une première réalisation particulière, la première position est une position dans laquelle la chambre fluidique est orientée parallèlement audit plan horizontal.

Selon une deuxième réalisation particulière, la première position est une position inclinée selon un premier angle d'inclinaison par rapport audit plan horizontal et la deuxième position est une position formant un deuxième angle d'inclinaison par rapport au plan horizontal qui est plus prononcée que ledit premier angle d'inclinaison.

Selon une particularité de la deuxième réalisation, la première position et la deuxième position sont identiques.

Selon une particularité, le procédé comporte :

- Une étape de détermination de la position des premières particules et des deuxièmes particules au premier instant, et
- Une première étape d'estimation de la position des premières particules et des deuxièmes particules au deuxième instant et de détermination, pour chaque particule, d'une première zone de position estimée au deuxième instant.

Selon une autre particularité, le procédé comporte :

- Une étape de vérification au deuxième instant de la position des premières particules et des deuxièmes particules par rapport à leur première zone de position estimée, et
- Une étape de détermination de la trajectoire de chaque particule qui a été détectée au deuxième instant dans sa première zone de position estimée.

Selon une autre particularité, le procédé comporte une deuxième étape d'estimation de la position des particules non détectés dans leur première zone de position estimée et de détermination d'une deuxième zone de position estimée pour ces particules.

L'invention concerne également un système de détection, employé pour mettre en œuvre le procédé de détection tel que défini ci-dessus, le système de détection comportant :

- Une chambre fluidique destinée à être remplie du liquide contenant les premières particules et les deuxièmes particules,
- Un dispositif mécanique actionnable pour faire pivoter la chambre fluidique ou l'ensemble du dispositif jusqu'à sa deuxième position,
- Un dispositif d'imagerie comportant au moins une source lumineuse et un capteur d'image, ladite chambre fluidique étant placée entre ladite source lumineuse et le capteur d'image,
- Des moyens de traitement des images acquises par le capteur.

Selon une particularité, la chambre fluidique est réalisée dans un composant présentant deux parois parallèles transparentes à une ou plusieurs longueurs d'ondes de la lumière émise par la source lumineuse.

Selon une autre particularité, la source lumineuse comporte une ou plusieurs diodes électroluminescentes, ou au moins une diode Laser.

## Brève description des figures

D'autres caractéristiques et avantages vont apparaître dans la description détaillée qui suit faite en regard des dessins annexés dans lesquels :

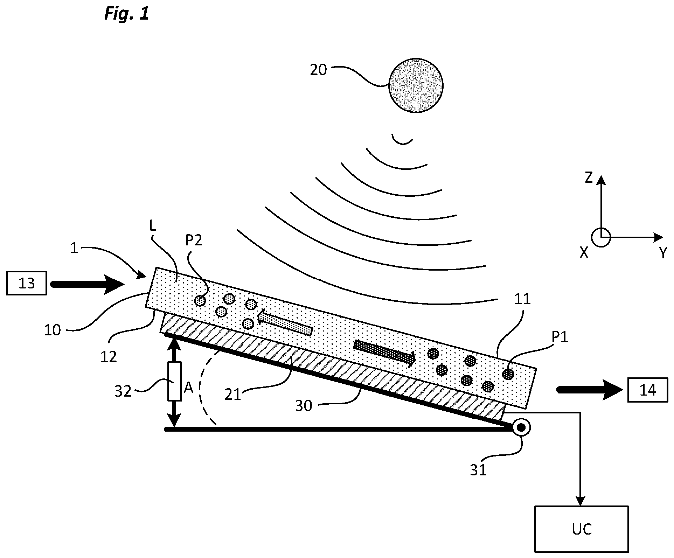

- La figure 1 représente, de manière schématique, le système de l'invention ;

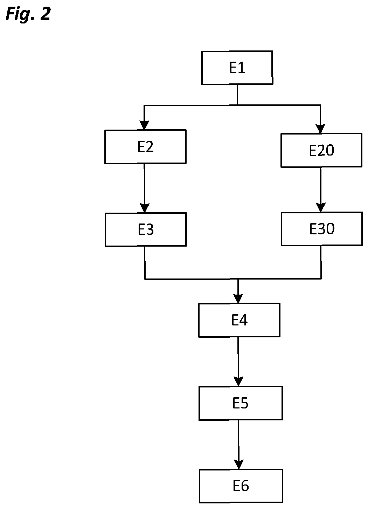

- La figure 2 représente le diagramme des étapes du procédé de détection de l'invention ;
- Les figures 3A à 3H illustrent les différentes étapes du procédé de détection de l'invention ;

## Description détaillée d'au moins un mode de réalisation

Pour la suite de la description, on définit un repère orthonormé X, Y, Z. Les deux directions X, Y matérialisent un plan horizontal et la direction Z matérialise une direction verticale.

L'invention concerne un procédé de détection de particules dans un liquide L, mis en œuvre pour discriminer les particules, en vue de pouvoir les compter et/ou les trier à l'intérieur du liquide L.

Les particules à détecter peuvent être de tous types. Il peut s'agir par exemple de particules de microplastique, de bulles d'air, de particules métalliques. Il peut également s'agir de poussières, de cellules, de microorganismes ou de microbilles, usuellement mises en œuvre dans des applications biologiques, ou encore de microalgues. Il peut également s'agir de gouttelettes insolubles dans le liquide, par exemple des gouttelettes d'huile dispersées dans une phase aqueuse. Le milieu porteur est un liquide, par exemple de l'eau, de l'huile ou un liquide biologique.

L'un des buts de l'invention est notamment de pouvoir discriminer des particules d'un premier type, dites premières particules P1, par rapport à des particules d'un deuxième type, dites deuxièmes particules P2. Les premières particules P1 et les deuxièmes particules P2 se différencient notamment entre elles par leur densité.

Par ailleurs, dans le cadre de l'invention, on considérera que les premières particules P1 ont une densité distincte de celle du liquide L (par exemple plus élevée que celle du liquide L).

Par la suite, on pourra distinguer deux cas :

- Un premier cas dans lequel les deuxièmes particules P2 ont chacune une densité distincte de celle des premières particules P1(par exemple moins élevée), mais équivalente à celle du liquide L ;
- Un deuxième cas dans lequel les deuxièmes particules P2 ont chacune une densité distincte de celle des premières particules P1 et également distincte de celle du liquide L (par exemple moins élevée que celle du liquide L) ;

Le procédé est mis en œuvre en employant un système de détection qui comporte principalement :

- Un dispositif fluidique comprenant une chambre fluidique 10, la chambre fluidique 10 délimitant un volume interne destiné à être rempli en totalité par le liquide L et les particules P1, P2 placées dans le liquide ;
- Un dispositif d'imagerie ;
- Un dispositif mécanique ;
- Des moyens de traitement ;

**Dispositif fluidique**

Figure 1

La chambre fluidique 10 peut être réalisée dans un composant 1 présentant deux parois 11, 12 parallèles transparentes aux longueurs d'ondes d'émission de la source lumineuse 20 du dispositif d'imagerie. Le composant 1 peut être une carte fluidique ou une lame de microscope sur laquelle on vient poser un cadre destiné à former la chambre fluidique. Il peut également s'agir de tout type de contenant pouvant recevoir un fluide et possédant au moins une face optiquement transparente (dans le cas d'un système d'imagerie en réflexion) ou deux faces transparentes en vis-à-vis (dans le cas d'un système d'imagerie en transmission).

Le dispositif fluidique peut comporter une entrée fluidique 13 destinée à être connectée sur la chambre fluidique 10 pour injecter le liquide L dans la chambre fluidique et une sortie fluidique 14, également connectée sur la chambre fluidique 10, pour évacuer le liquide L hors de la chambre fluidique. Des vannes peuvent être placées sur l'entrée fluidique et la sortie fluidique, et une pompe (non représentée) peut être commandée pour contrôler l'injection du liquide L vers l'intérieur de la chambre fluidique 10 via l'entrée fluidique et l'évacuation du liquide L hors de la chambre fluidique 10 via la sortie fluidique.

**Dispositif d'imagerie**

Figure 1

Pour des raisons de simplicité, le dispositif d'imagerie est avantageusement de type sans lentille. Dans ce cas, il comporte une source lumineuse 20 composée d'une ou plusieurs diodes électroluminescentes. Elle peut être associée à un diffuseur et à un "pinhole", ou à une fibre optique. La source lumineuse 20 peut aussi être une diode Laser.

Bien entendu, un montage à microscopie classique pourrait aussi être envisagé, en lieu et place du montage à imagerie sans lentille.

La chambre fluidique 10 est disposée entre la source lumineuse 20 et un capteur d'image 21. Le dispositif d'imagerie fonctionne donc en transmission.

Le capteur d'image 21 employé est apte à former une image de la chambre fluidique 10. La chambre fluidique 10 est avantageusement fixe par rapport au capteur d'image 21, de manière à limiter les perturbations. Ainsi, les particules P1, P2 mises en mouvement dans la chambre fluidique 10 sont en mouvement par rapport au capteur d'image 21.

La surface du capteur d'image 21 est avantageusement orientée parallèlement aux deux parois 11, 12 de la chambre fluidique 10 de manière à pouvoir acquérir une image uniforme de toute la chambre fluidique 10. On verra ci-après que le capteur d'image 21 est par exemple monté directement sous le composant 1 de chambre fluidique, sur un support actionnable en pivotement. Il suit donc le mouvement du composant 1.

Il peut s'agir par exemple d'un capteur d'image de type CCD ou un CMOS.

Le dispositif d'imagerie est dit sans lentille car il ne dispose pas de système optique de formation d'image, en particulier d'optique de grossissement entre le capteur d'image 21 et la chambre fluidique 10.

L'avantage de ce type de dispositif sans lentille est de pouvoir faire de l'imagerie grand champ sur des objets microscopiques, et donc de pouvoir observer/détecter un grand nombre d'objets, contrairement à un microscope classique où le champ est beaucoup plus réduit.

Aussi, l'image acquise par le capteur d'image 21 comporte des figures d'interférences (ou figures de diffraction), chaque figure d'interférence étant générée par une particule présente dans le liquide L contenu dans la chambre fluidique 10.

Dans une variante de réalisation, il est possible de proposer une source lumineuse 20 capable d'émettre à plusieurs longueurs d'ondes distinctes, afin d'obtenir des informations supplémentaires sur les échantillons.

Il peut également être combiné à d'autres systèmes de détection ou d'autres modalités pour obtenir plus de précision sur les objets observés dans le cas d'échantillons complexes possédant plusieurs familles de particules de densités diverses.

**Dispositif mécanique**

Figure 1

L'une des particularités de l'invention est de pouvoir venir incliner la chambre fluidique 10 par rapport au plan horizontal X, Y, de sorte que ses deux parois 11, 12 opposées forment chacune un angle A non nul avec ledit plan horizontal X, Y.

Pour cela, le système de l'invention peut comporter un dispositif mécanique utilisé pour incliner la chambre fluidique 10, à l'angle A choisi.

Ce dispositif mécanique peut comporter des cales distinctes, chaque cale permettant une inclinaison à un angle déterminé. De manière non limitative, le dispositif mécanique peut aussi comporter un support 30 monté sur une charnière 31 et un mécanisme de vérin 32 ou équivalent, fixé audit support 30 et contrôlé pour soulever ledit support 30 et le faire pivoter autour de l'axe de la charnière 31 jusqu'à l'inclinaison souhaitée. La commande du vérin peut être réalisée par les moyens de traitement UC ou par tout autre moyen.

Il faut noter qu'il est également possible de venir incliner la chambre fluidique 10, accompagnée du capteur d'image 21.

De manière non limitative, la chambre fluidique 10 sera inclinée selon un angle A suffisant pour observer un déplacement conséquent des particules (par déplacement conséquent, on entend que la distance parcourue par la particule correspond à plusieurs fois la taille de la particule), sans pour autant que toutes les particules ne disparaissent d'une image à l'autre capturée par le capteur d'image 21. Le choix de cet angle A dépendra notamment des rapports de densité entre le liquide L et les particules, ainsi que de la viscosité du liquide L employé.

**Moyens de traitement**

Figure 1

Les moyens de traitement UC sont configurés pour traiter les images acquises par le capteur d'image 21. Les moyens de traitement UC comportent un microprocesseur et des moyens de mémorisation. Le microprocesseur est configuré pour exécuter une séquence comportant les instructions nécessaires pour effectuer les opérations de traitement des images et les calculs de trajectoires des particules en vue de pouvoir les discriminer (voir ci-après). Il peut également être programmé pour commander le dispositif mécanique en vue de contrôler l'inclinaison de la chambre fluidique 10.

**Principe mis en œuvre**

On a constaté que lorsque l'on place dans un liquide L une particule plus ou moins dense que ce liquide, elle aura tendance à se déplacer (dans un sens ou dans l'autre, selon sa densité et celle du liquide) suivant l'axe d'inclinaison de la chambre fluidique 10.

En effet, en appliquant le principe de la dynamique aux particules lors d'un déplacement à faible vitesse dans un fluide visqueux, supposé homogène et isotrope en absence de mouvement du fluide (frottement supposé constants), on peut obtenir les équations régissant l'accélération et la vitesse d'une particule projetée selon l'axe de l'inclinaison de la chambre fluidique :

$$v(t) = \frac{1}{v} . g . \sin(\alpha) . V . \left( \rho_{particule} - \rho_{fluide} \right) (e^{\frac{v}{m}t} - 1)$$

$$\frac{d}{dt} v(\text{t}) = \frac{Vg}{m} \sin(\alpha) \cdot \left( \rho_{particule} - \rho_{fluide} \right) . e^{\frac{v}{m}t}$$

Avec :

- v : le coefficient de frottement entre la particule et le fluide environnant.
- *V* : le volume de la particule
- *g* : l'intensité de pesanteur
- *α* : l'angle d'inclinaison du dispositif (qui correspond à l'angle A défini ci-dessus)
- m : la masse de la particule
- $\rho$ : les masses volumiques

Il apparait ainsi que, selon si une particule est plus ou moins dense que le fluide environnant, son déplacement se fera dans un sens ou dans l'autre, la projection de l'accélération sur l'axe de l'inclinaison étant du même signe que $(\rho_{particule} - \rho_{fluide})$.

Autrement dit, en inclinant la chambre fluidique 10 par rapport à l'horizontale d'un angle A non nul, si les premières particules P1 et les deuxièmes particules P2 ont des densités distinctes entre elles, avec la densité des premières particules P1 supérieure à celle du liquide L et la densité des deuxièmes particules P2 inférieure à celle du liquide L, les premières particules P1, plus denses, auront tendance se déplacer dans le sens naturel qui suit l'inclinaison de la chambre fluidique 10, suivant une direction parallèle à l'axe d'inclinaison de la chambre, et les deuxièmes particules, moins denses, auront tendance à se déplacer dans le sens opposé à celui qui suit l'inclinaison de la chambre fluidique 10, en suivant une direction parallèle à l'axe d'inclinaison de la chambre fluidique 10.

Il faut noter que si les premières particules P1 et les deuxièmes particules P2 sont toutes deux plus denses ou moins denses que le liquide L environnant, elles se déplaceront dans le même sens mais à des vitesses relatives différentes.

**Procédé de détection**

Figure 2

Figures 3A à 3H

Le procédé consiste à discriminer les particules P1, P2 présentes dans le liquide L placé dans la chambre fluidique 10. Dans cette description, on considère que les premières particules P1 ont une densité plus élevée que celle du liquide L dans lequel elles sont placées et que les deuxièmes particules P2 ont une densité plus faible que celle du liquide L dans lequel elles sont placées.

Il comporte les étapes suivantes, décrites ci-dessous :

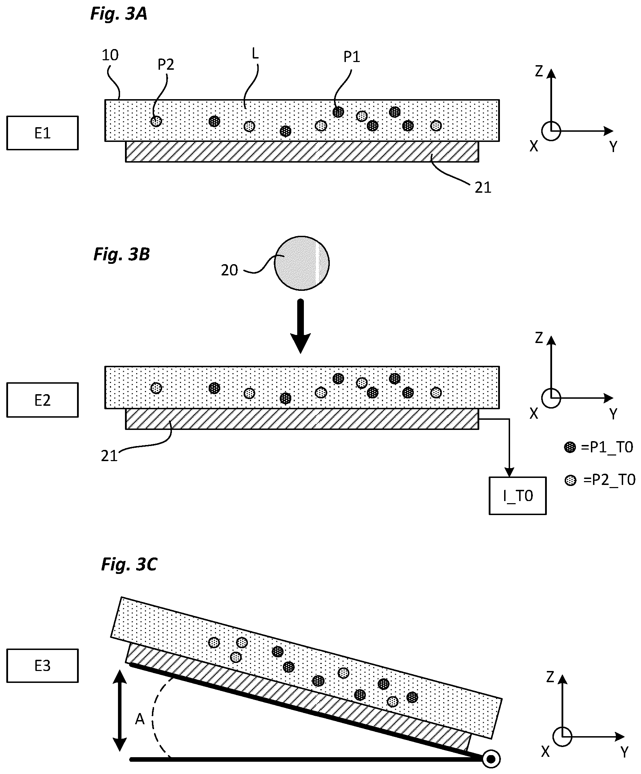

E1 - Figure 3A : La chambre fluidique 10 est remplie, via l'entrée fluidique 13, avec le liquide L contenant les particules (premières particules et deuxièmes particules), jusqu'à ce que son volume soit entièrement occupé par le liquide L.

Deux variantes sont alors possibles.

Première variante :

E2 - Figure 3B : Les moyens de traitement UC commandent le capteur d'image 21 pour une première acquisition à un premier instant T0, la chambre fluidique 10 étant en position horizontale. Les premières particules et les deuxièmes particules dans une première position à T0 sont référencées P1_TO et P2_T0.

E3 - Figure 3C : Les moyens de traitement UC commandent le dispositif mécanique pour incliner la chambre à l'angle A souhaité, non nul par rapport au plan horizontal, par exemple à un angle de 30°. Cette inclinaison de la chambre fluidique 10 est destiné à entraîner un déplacement des particules, selon leur densité par rapport à celle du liquide L.

Deuxième variante :

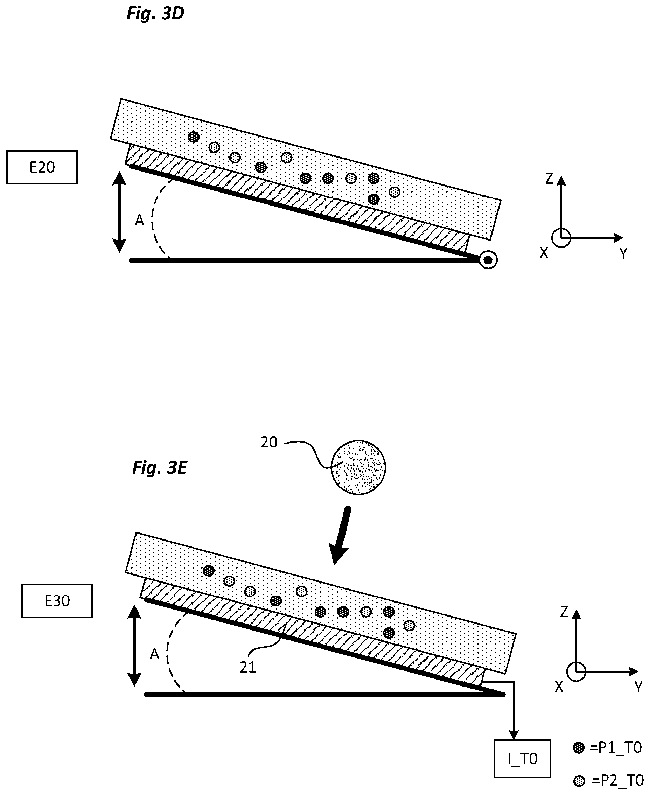

E20 - Figure 3D : Les moyens de traitement UC commandent le dispositif mécanique pour incliner la chambre fluidique 10 à l'angle A souhaité, non nul par rapport au plan horizontal X, Y, par exemple à un angle A de 30°. Cette inclinaison de la chambre fluidique 10 entraîne un déplacement des particules P1, P2, selon leur densité par rapport à celle du liquide L.

E30 - Figure 3E : Les moyens de traitement UC commandent le capteur d'image 21 pour une première acquisition à un premier instant T0, la chambre fluidique 10 étant en position inclinée. Les premières particules et les deuxièmes particules dans une première position à T0 sont référencées P1_T0 et P2_T0.

Ensuite le procédé est identique pour les deux variantes :

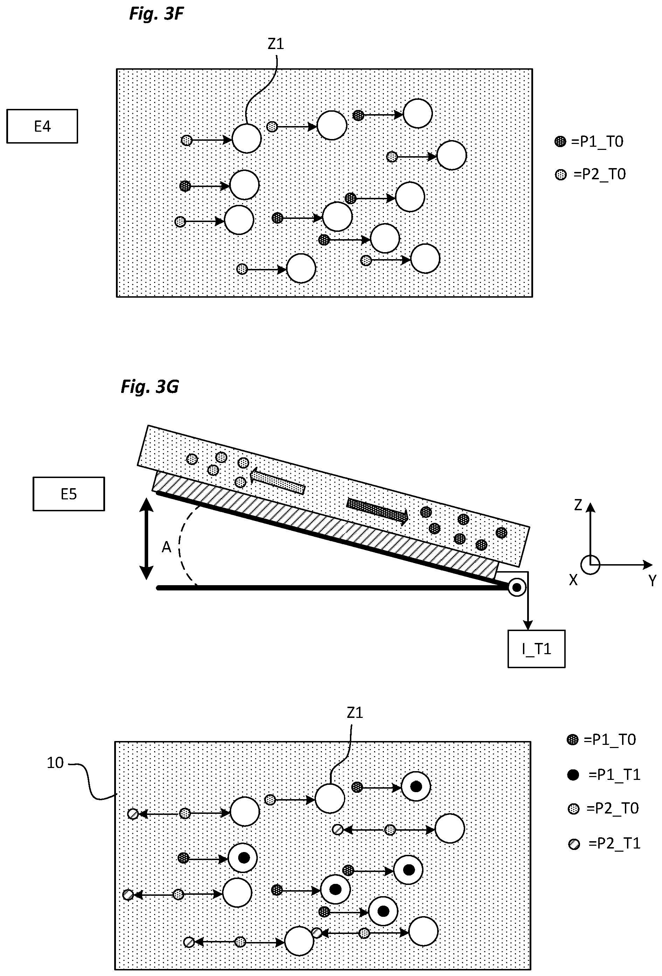

E4 - Figure 3F : Les moyens de traitement UC sont configurés pour estimer la position que chaque particule devrait avoir à un deuxième instant T1. Les moyens de traitement UC déterminent ainsi une zone Z1 de position estimée, dans laquelle chaque particule devrait se trouver suite à un déplacement dans le sens qui suit l'inclinaison de la chambre fluidique 10.

E5 - Figure 3G : Les moyens de traitement UC commandent le capteur d'image 21 pour une deuxième acquisition au deuxième instant T1.

Les moyens de traitement UC identifient les particules qui se trouvent bien dans leur zone Z1 de position estimée. Dans l'exemple ci-dessus, les premières particules P1 "plus denses" se trouvent bien chacune dans leur zone Z1 de position estimée, tandis que les deuxièmes particules P2 "moins denses" ne sont pas dans la zone Z1 de position estimée. On constate en effet que les premières particules P1 se déplacent alors dans le sens qui suit l'inclinaison de la chambre fluidique 10, tandis que les deuxièmes particules P2, moins denses que le liquide L, se déplacent dans le sens opposé à celui qui suit l'inclinaison de la chambre fluidique 10.

Les moyens de traitement UC déterminent la trajectoire des premières particules P1 et peuvent facilement les identifier pour les trier et les compter.

Les premières particules et les deuxièmes particules dans la position T1 sont référencées P1_T1 et P2 _T1.

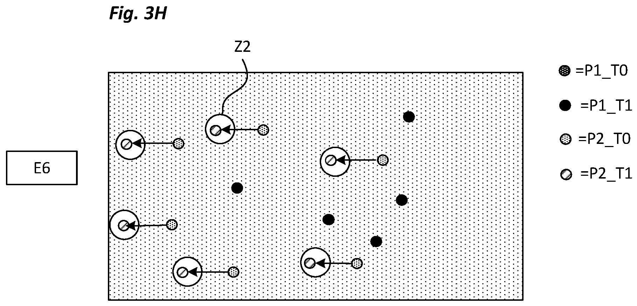

E6 - Figure 3H : Les moyens de traitement UC déterminent une deuxième zone Z2 de position estimée à l'instant T1 pour les deuxièmes particules P2, en considérant que ces deuxièmes particules sont moins denses que le liquide L. La deuxième zone Z2 de position estimée sera une zone dans laquelle chaque deuxième particule P2 aura tendance à remonter.

A partir de l'image acquise au deuxième instant T1, les moyens de traitement UC déterminent si les deuxièmes particules P2 se trouvent dans la deuxième zone Z2 de position estimée.

Les moyens de traitement UC identifient les particules qui se trouvent bien dans la deuxième zone Z2 de position estimée. Dans l'exemple ci-dessus, les deuxièmes particules "moins denses" se trouvent bien chacune dans la deuxième zone Z2 de position estimée.

Les moyens de traitement UC déterminent la trajectoire des deuxièmes particules et peuvent facilement les identifier pour les trier et les compter.

Les particules toujours isolées (non identifiées) après ces deux étapes de traitement (E5 et E6) seront soit des particules dont la densité varie grandement par rapport aux deux autres types de particules, et pourront alors faire l'objet d'une nouvelle étape de prédiction de position ou ne pas être considérées car vraisemblablement immobiles par rapport au capteur.

Dans un cas où les deuxièmes particules P2 seraient de densité équivalente à celle du liquide L, les moyens de traitement UC peuvent les discriminer par rapport aux premières particules P1, même si elles ne migrent pas dans le liquide L jusqu'à leur zone de position estimée.

Il faut noter que si plusieurs particules se trouvent dans une même zone de position estimée, les moyens de traitement sont par exemple configurés pour choisir celle qui minimise une distance, soit purement spatiale en absence de descripteur de particule, soit en prenant en compte les différentes variables descriptives choisies.

Le procédé peut bien entendu être poursuivi après l'instant T1, en vue de reconstituer la trajectoire de chaque particule présente dans le liquide L.

Il faut noter que lors du calcul de la zone de position estimée pour chaque particule, les moyens de traitement tiennent compte de la vitesse à laquelle la particule devrait être amenée à se déplacer dans le fluide, par exemple en faisant une hypothèse sur la densité de la particule ciblée et/ou en observant leur comportement lors d'essais préliminaires. Le déplacement des particules, lié à l'application d'un angle d'inclinaison à la chambre fluidique étant déterministe, il est possible de définir un déplacement moyen à prendre comme référence.

Si la particule se trouve bien dans sa zone de position estimée à l'instant T1, les moyens de traitement pourront en conclure qu'il s'agit bien de la particule ciblée et à compter.

Il faut également noter que si les premières particules P1 et les deuxièmes particules P2 sont toutes deux plus denses ou moins denses que le liquide L environnant, elles se déplaceront dans le même sens mais à des vitesses différentes. La zone de position estimée de la particule pourrait être adaptée en faisant une hypothèse sur la densité de chaque type de particule et/ou en effectuant des essais préliminaires.

On dispose ainsi d'une solution simple pour discriminer des particules au sein d'un liquide, utilisant un simple dispositif mécanique pour incliner la chambre fluidique 10 et un dispositif d'imagerie sans lentille.

## Revendications

1. Procédé de détection de particules d'un premier type, dites premières particules (P1), présentes dans un liquide (L), ledit liquide contenant également des particules d'un deuxième type distinct du premier type, et dites deuxièmes particules (P2), ledit liquide (L) étant placé dans une chambre fluidique (10), lesdites premières particules (P1) ayant chacune une densité distincte de celle du liquide (L) et de celle de chacune des deuxièmes particules (P2), ladite chambre fluidique (10) ayant un volume fermé occupé en totalité par ledit liquide (L), ladite détection étant mise en œuvre par capture d'images de ladite chambre fluidique (10), le procédé consistant à :

   - Capturer à un premier instant au moins une première image de la chambre fluidique (10), ladite chambre fluidique (10) étant dans une première position,
   - Capturer à un deuxième instant, postérieur au premier instant, au moins une deuxième image de la chambre fluidique (10) dans une deuxième position, ladite deuxième position étant une position inclinée par rapport à un plan horizontal et adaptée pour déclencher au moins un mouvement des premières particules (P1) à l'intérieur du liquide,
- Traiter lesdites images capturées pour déterminer le mouvement et/ou la vitesse des premières particules (P1) présentes dans le liquide (L),
- Discriminer les premières particules (P1) des deuxièmes particules (P2) à partir du mouvement et/ou de la vitesse desdites premières particules (P1) dans le liquide, ledit mouvement et/ou la vitesse desdites premières particules (P1) et desdites deuxièmes particules (P2) dans le liquide dépendant de leur densité respective par rapport à celle du liquide.

2. Procédé selon la revendication 1, **caractérisé en ce que** la première position est une position dans laquelle la chambre fluidique (10) est orientée parallèlement audit plan horizontal.

3. Procédé selon la revendication 1, **caractérisé en ce que** la première position est une position inclinée selon un premier angle d'inclinaison par rapport audit plan horizontal et **en ce que** la deuxième position est une position formant un deuxième angle d'inclinaison par rapport au plan horizontal qui est plus prononcée que ledit premier angle d'inclinaison.

4. Procédé selon la revendication 3, **caractérisé en ce que** la première position et la deuxième position sont identiques.

5. Procédé selon l'une des revendications 1 à 4, **caractérisé en ce qu'**il comporte :

   - Une étape de détermination de la position des premières particules (P1) et des deuxièmes particules (P2) au premier instant (T0), et
   - Une première étape d'estimation de la position des premières particules (P1) et des deuxièmes particules (P2) au deuxième instant (T1) et de détermination, pour chaque particule, d'une première zone (Z1) de position estimée au deuxième instant (T1).

6. Procédé selon la revendication 5, **caractérisé en ce qu'**il comporte :

   - Une étape de vérification au deuxième instant (T1) de la position des premières particules (P1) et des deuxièmes particules (P2) par rapport à leur première zone (Z1) de position estimée, et
   - Une étape de détermination de la trajectoire de chaque particule qui a été détectée au deuxième instant (T1) dans sa première zone (Z1) de position estimée.

7. Procédé selon la revendication 5 ou 6, **caractérisé en ce qu'**il comporte une deuxième étape d'estimation de la position des particules non détectés dans leur première zone (Z1) de position estimée et de détermination d'une deuxième zone (Z2) de position estimée pour ces particules.

8. Système de détection, employé pour mettre en œuvre le procédé de détection tel que défini dans l'une des revendications 1 à 7, **caractérisé en ce qu'**il comporte :

   - Une chambre fluidique (10) destinée à être remplie du liquide contenant les premières particules et les deuxièmes particules,
   - Un dispositif mécanique actionnable pour faire pivoter la chambre fluidique (10) ou l'ensemble du dispositif jusqu'à sa deuxième position,
   - Un dispositif d'imagerie comportant au moins une source lumineuse (20) et un capteur d'image (21), ladite chambre fluidique (10) étant placée entre ladite source lumineuse (20) et le capteur d'image (21),
   - Des moyens de traitement des images acquises par le capteur.

9. Système selon la revendication 8, **caractérisé en ce que** la chambre fluidique (10) est réalisée dans un composant (1) présentant deux parois (11, 12) parallèles transparentes à une ou plusieurs longueurs d'ondes de la lumière émise par la source lumineuse (20).

10. Système selon la revendication 8 ou 9, **caractérisé en ce que** la source lumineuse comporte une ou plusieurs diodes électroluminescentes, ou une diode Laser.

**Patentansprüche**

1. Verfahren zur Detektion von Teilchen eines ersten Typs, erste Teilchen (P1) genannt, die in einer Flüssigkeit (L) vorhanden sind, wobei die Flüssigkeit auch Teilchen eines von dem ersten Typ verschiedenen zweiten Typs enthält, die zweite Teilchen (P2) genannt werden, wobei die Flüssigkeit (L) in einer Fluidkammer (10) angeordnet ist, wobei die ersten Teilchen (P1) jeweils eine Dichte haben, die von derjenigen der Flüssigkeit (L) und von derjenigen jedes der zweiten Teilchen (P2) verschieden ist, wobei die Fluidkammer (10) ein von der Flüssigkeit (L) vollständig eingenommenes geschlossenes Volumen hat, wobei die Detektion durch Aufnehmen von Bildern der Fluidkammer (10) durchgeführt wird, wobei das Verfahren darin besteht:

   - Zu einem ersten Zeitpunkt mindestens ein erstes Bild der Fluidkammer (10) aufzunehmen, wobei die Fluidkammer (10) in einer ersten Position ist,
   - Zu einem zweiten Zeitpunkt, nach dem ersten Zeitpunkt, mindestens ein zweites Bild der Fluidkammer (10) in einer zweiten Position aufzunehmen, wobei die zweite Position eine Position ist, die in Bezug auf eine horizontale Ebene geneigt ist und dazu angepasst ist, mindestens eine Bewegung der ersten Teilchen (P1) innerhalb der Flüssigkeit auszulösen,
   - Die aufgenommenen Bilder zu verarbeiten, um die Bewegung und/oder die Geschwindigkeit der ersten Teilchen (P1), die in der Flüssigkeit (L) vorhanden sind, zu bestimmen,
   - Die ersten Teilchen (P1) von den zweiten Teilchen (P2) anhand der Bewegung und/oder der Geschwindigkeit der ersten Teilchen (P1) in der Flüssigkeit zu unterscheiden, wobei die Bewegung und/oder die Geschwindigkeit der ersten Teilchen (P1) und der zweiten Teilchen (P2) in der Flüssigkeit von ihrer jeweiligen Dichte in Bezug auf diejenige der Flüssigkeit abhängt.

2. Verfahren nach Anspruch 1, **dadurch gekennzeichnet, dass** die erste Position eine Position ist, in der die Fluidkammer (10) parallel zu der horizontalen Ebene ausgerichtet ist.

3. Verfahren nach Anspruch 1, **dadurch gekennzeichnet, dass** die erste Position eine Position ist, die gemäß einem ersten Neigungswinkel in Bezug auf die horizontale Ebene geneigt ist, und dass die zweite Position eine Position ist, die einen zweiten Neigungswinkel in Bezug auf die horizontale Ebene bildet, der ausgeprägter als der erste Neigungswinkel ist.

4. Verfahren nach Anspruch 3, **dadurch gekennzeichnet, dass** die erste Position und die zweite Position identisch sind.

5. Verfahren nach einem der Ansprüche 1 bis 4, **dadurch gekennzeichnet, dass** es umfasst:

   - Einen Schritt des Bestimmens der Position der ersten Teilchen (P1) und der zweiten Teilchen (P2) zu dem ersten Zeitpunkt (T0), und
   - Einen ersten Schritt des Schätzens der Position der ersten Teilchen (P1) und der zweiten Teilchen (P2) zu dem zweiten Zeitpunkt (T1) und des Bestimmens, für jedes Teilchen, eines ersten geschätzten Positionsbereichs (Z1) zu dem zweiten Zeitpunkt (T1).

6. Verfahren nach Anspruch 5, **dadurch gekennzeichnet, dass** es umfasst:

   - Einen Schritt des Überprüfens, zu dem zweiten Zeitpunkt (T1), der Position der ersten Teilchen (P1) und der zweiten Teilchen (P2) in Bezug auf ihren ersten geschätzten Positionsbereich (Z1), und
   - Einen Schritt des Bestimmens der Bahn jedes Teilchens, das zu dem zweiten Zeitpunkt (T1) in seinem ersten geschätzten Positionsbereich (Z1) detektiert worden ist.

7. Verfahren nach Anspruch 5 oder 6, **dadurch gekennzeichnet, dass** es einen zweiten Schritt des Schätzens der Position der Teilchen, die in ihrem ersten geschätzten Positionsbereich (Z1) nicht detektiert wurden, und des Bestimmens eines zweiten geschätzten Positionsbereichs (Z2) für diese Teilchen umfasst.

8. Detektionssystem, das dazu eingesetzt wird, das in einem der Ansprüche 1 bis 7 definierte Verfahren zur Detektion durchzuführen, **dadurch gekennzeichnet, dass** es umfasst:

   - Eine Fluidkammer (10), die dazu bestimmt ist, mit Flüssigkeit gefüllt zu werden, welche die ersten Teilchen und die zweiten Teilchen enthält,

- Eine mechanische Vorrichtung, die betätigbar ist, um die Fluidkammer (10) oder die gesamte Vorrichtung bis zu ihrer zweiten Position schwenken zu lassen,
- Eine Bildgebungsvorrichtung, die mindestens eine Lichtquelle (20) und einen Bildsensor (21) umfasst, wobei die Fluidkammer (10) zwischen der Lichtquelle (20) und dem Bildsensor (21) angeordnet ist,
- Mittel zur Verarbeitung der von dem Sensor erfassten Bilder.

9. System nach Anspruch 8, **dadurch gekennzeichnet, dass** die Fluidkammer (10) in einer Komponente (1) ausgeführt ist, die zwei parallele Wände (11, 12) aufweist, die für eine oder mehrere Wellenlängen des von der Lichtquelle (20) emittierten Lichts durchlässig sind.

10. System nach Anspruch 8 oder 9, **dadurch gekennzeichnet, dass** die Lichtquelle eine oder mehrere Leuchtdioden oder eine Laserdiode umfasst.


**Claims**

1. Method of detection of particles of a first type, called first particles (P1), present in a liquid (L), said liquid also containing particles of a second type distinct from the first type, and called second particles (P2), said liquid (L) being placed in a fluidic chamber (10), said first particles (P1) each having a density distinct from that of the liquid (L) and from that of each of the second particles (P2), said fluidic chamber (10) having a closed volume occupied entirely by said liquid (L), said detection being achieved by capturing images of said fluidic chamber (10), the method consisting in:

   - capturing at a first time at least a first image of the fluidic chamber (10), said fluidic chamber (10) being in a first position,
   - capturing at a second time, subsequent to the first time, at least a second image of the fluidic chamber (10) in a second position, said second position being a position that is inclined with respect to a horizontal plane and that is configured to initiate at least one movement of the first particles (P1) inside the liquid,
   - processing said captured images to determine the movement and/or speed of the first particles (P1) present in the liquid (L),
   - discriminating between the first particles (P1) and second particles (P2) on the basis of the movement and/or speed of said first particles (P1) in the liquid, said movement and/or speed of said first particles (P1) and said second particles (P2) in the liquid depending on their respective density with respect to that of the liquid.

2. Method according to Claim 1, **characterized in that** the first position is a position in which the fluidic chamber (10) is oriented parallel to said horizontal plane.

3. Method according to Claim 1, **characterized in that** the first position is a position that is inclined at a first angle of inclination with respect to said horizontal plane and **in that** the second position is a position making a second angle of inclination to the horizontal plane that is more pronounced than said first angle of inclination.

4. Method according to Claim 3, **characterized in that** the first position and the second position are identical.

5. Method according to one of Claims 1 to 4, **characterized in that** it comprises:

   - a step of determining the position of the first particles (P1) and of the second particles (P2) at the first time (T0), and
   - a first step of estimating the position of the first particles (P1) and of the second particles (P2) at the second time (T1) and of determining, for each particle, a first estimated position zone (Z1) at the second time (T1).

6. Method according to Claim 5, **characterized in that** it comprises:

   - a step of verifying at the second time (T1) the position of the first particles (P1) and of the second particles (P2) with respect to their first estimated position zone (Z1), and
   - a step of determining the path of each particle detected at the second time (T1) in its first estimated position zone (Z1).

7. Method according to Claim 5 or 6, **characterized in that** it comprises a second step of estimating the position of the particles not detected in their first estimated position zone (Z1) and of determining a second estimated position zone (Z2) for these particles.

8. Detection system employed to implement the detection method such as defined in one of Claims 1 to 7, **characterized in that** it comprises:

   - a fluidic chamber (10) intended to be filled with the liquid containing the first particles and second particles,
   - a mechanical device that is able to be actuated to make the fluidic chamber (10) or the entire device pivot to its second position,
   - an imaging device comprising at least one light source (20) and an image sensor (21), said fluidic chamber (10) being placed between said light source (20) and the image sensor (21),
   - means for processing the images acquired by the sensor.

9. System according to Claim 8, **characterized in that** the fluidic chamber (10) is formed in a component (1) having two parallel walls (11, 12) that are transparent to one or more wavelengths of the light emitted by the light source (20).

10. System according to Claim 8 or 9, **characterized in that** the light source comprises one or more light-emitting diodes, or a laser diode.

**Fig. 1**

*Fig. 2*

*Fig. 3A*

*Fig. 3B*

*Fig. 3C*

**Fig. 3D**

E20

A

Z

X

Y

**Fig. 3E**

20

E30

A

21

Z

X

Y

I_T0

● =P1_T0

◉ =P2_T0

**Fig. 3F**

Z1

E4

⬤ =P1_T0

◍ =P2_T0

**Fig. 3G**

E5

A

I_T1

Z
X    Y

Z1

10

⬤ =P1_T0

● =P1_T1

◍ =P2_T0

○ =P2_T1

**Fig. 3H**

Z2

E6

⊕ =P1_T0

● =P1_T1

◉ =P2_T0

◌ =P2_T1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 3343201 B1

- FR 3118169 A1